# EUROPÄISCHE PATENTSCHRIFT

(11) **EP 2 831 536 B1**
(45) Veröffentlichungstag und Bekanntmachung des Hinweises auf die Patenterteilung: **19.08.2015**
(21) Anmeldenummer: 13711652.1
(22) Anmeldetag: 20.03.2013
(51) Int. Cl.: G01B 3/06, G01B 5/08, G01B 5/213

(54) **GLIEDERMAßSTAB**
FOLDING RULE
MÈTRE PLIANT

(30) Priorität: 30.03.2012 DE 102012205302
(43) Veröffentlichungstag der Anmeldung: 04.02.2015
(73) Patentinhaber: Neugärtner, Mario, 99195 Eckstedt (DE)
(72) Erfinder: Neugärtner, Mario, 99195 Eckstedt (DE)
(74) Vertreter: Liedtke, Markus
(86) Internationale Anmeldenummer: PCT/EP2013/055784
(87) Internationale Veröffentlichungsnummer: WO 2013/143932

(56) Entgegenhaltungen:
- CH-A- 439 768
- GB-A- 191 022 331
- US-A- 1 680 566

## Beschreibung

Die Erfindung betrifft einen Gliedermaßstab nach den Merkmalen des Oberbegriffs des Anspruchs 1.

Aus dem Stand der Technik sind Gliedermaßstäbe zum Messen von Längenabmessungen allgemein bekannt. Des Weiteren sind Messschieber allgemein bekannt, welche ein Messen von Durchmesserwerten von Objekten ermöglichen.

GB 22331 A beschreibt ein Gerät, umfassend eine Platte mit V-förmiger Aussparung und ein schwenkbares Glied. Eine Seite der Platte weist eine Skale zur Durchmessermessung von Objekten auf, welche derart ausgebildet ist, dass bei einem vollständigen Umschliessen des Objektes, wobei die Seiten der V-förmigen Aussparung und das schwenkbare Glied am Objekt anliegen, ein Bereich des schwenkbaren Gliedes an der Skale anliegt und ein jeweiliger Anlagepunkt an der Skale den Durchmesser des Objektes anzeigt.

In der CN 201 104 191 Y wird eine faltbare Schieblehre zur Durchmesserermittlung zylindrischer Objekte beschrieben. Die Schieblehre weist einen Maßstab auf, an welchem ein erstes Anlageelement bis zu einem ersten Anschlag schwenkbar angeordnet ist. Ein zweites Anlageelement ist an einem auf dem Maßstab gleitenden Schlitten bis zu einem zweiten Anschlag schwenkbar befestigt. Zur Durchmesserermittlung werden die beiden Anlageelemente bis zu ihrem Anschlag geschwenkt, die Schieblehre wird mit dem ersten Anlageelement und dem Maßstab an das zylindrische Objekt, dessen Durchmesser zu ermitteln ist, angelegt, und das zweite Anlageelement wird mittels des Schlittens an das zylindrische Objekt herangeschoben. Der Durchmesser des zylindrischen Objektes wird auf dem Maßstab abgelesen.

Aus der DE 834 904 B ist ein Kombinationsmaßstab bekannt. Ein Gelenkmaßstab ist mit besonders geformten Zusatzgliedern zum Zwecke von Tiefen- und Stärkenmessung versehen. Einzelne Glieder des Maßstabes sind mit Rasten zur Feststellung eines rechtwinkligen Dreiecks sowie mit Winkelteilungen versehen. Die Enden einzelner Glieder sind mit Spitzen zum Abgreifen von Entfernungen ausgerüstet.

Der Erfindung liegt die Aufgabe zu Grunde, einen verbesserten Gliedermaßstab anzugeben.

Die Aufgabe wird erfindungsgemäß gelöst durch einen Gliedermaßstab mit den Merkmalen des Anspruchs 1.

Vorteilhafte Ausgestaltungen der Erfindung sind Gegenstand der Unteransprüche.

Ein Gliedermaßstab umfasst zumindest drei schwenkbar aneinander befestigte Glieder.

Erfindungsgemäß weist zumindest eines der Glieder zumindest eine Skale zur Durchmessermessung von Objekten auf, welche derart ausgebildet ist, dass bei einem vollständigen Umschließen des Objektes mit drei benachbarten Gliedern, wobei Innenseiten der drei Glieder jeweils am Objekt anliegen, ein vorgegebener Bereich eines der Glieder an der Skale anliegt und ein jeweiliger Anlagepunkt an der Skale den Durchmesser des Objektes anzeigt.

Dieser Gliedermaßstab ermöglicht das Messen des Durchmessers von Objekten, insbesondere von runden Objekten. Dabei ist es nicht erforderlich, dass eine Stirnseite des Objektes zugänglich ist, um dadurch den Durchmesser durch Auflegen des Gliedermaßstabs quer über die Stirnseite messen zu können, sondern der erfindungsgemäße Gliedermaßstab ermöglicht die Durchmessermessung, wie oben beschrieben, durch ein vollständiges Umschließen des Objektes. Dies ermöglicht die Durchmessermessung auch von Objekten, deren Stirnseiten verdeckt und/oder nicht zugänglich sind, beispielsweise in einem eingebauten Zustand der Objekte. Des Weiteren ist dadurch insbesondere auch eine exakte Durchmessermessung von Objekten ermöglicht, welche über eine Längsausdehnung hinweg an verschiedenen Stellen unterschiedliche Durchmesser aufweisen, so dass, selbst wenn die Stirnseite des Objektes zugänglich sein sollte, durch Auflegen des Gliedermaßstabs auf die Stirnseite der jeweilige Durchmesser nur grob geschätzt werden könnte.

Der erfindungsgemäße Gliedermaßstab ist im Gegensatz dazu an der jeweiligen Stelle, an welcher der Durchmesser des Objektes zu bestimmen ist, zu positionieren und die drei benachbarten Glieder, welche zweckmäßigerweise eine gleiche Länge aufweisen, sind dann derart gegeneinander zu verschwenken, dass sie das Objekt an dieser Stelle vollständig umschließen, wobei die Innenseiten der drei Glieder jeweils am Objekt anliegen und ein vorgegebener Bereich eines der Glieder an der Skale anliegt. D. h. die drei Glieder bilden dann ein Dreieck. Am Anlagepunkt des vorgegebenen Bereichs auf der Skale ist dann der jeweilige Durchmesserwert exakt abzulesen.

Um das Anliegen der richtigen, d. h. der vorgegebenen Innenseiten der drei Glieder am Objekt sicherzustellen und ein versehentliches Anlegen der den Innenseiten gegenüberliegenden Außenseiten der Glieder an das Objekt zu vermeiden, sind diese Innenseiten vorzugsweise markiert, beispielsweise durch jeweils eine farbliche Markierung. Dies ist besonders vorteilhaft, da Teilstriche der Skale nicht senkrecht zu der Innenseite des Gliedes verlaufen, auf welchem die Skale angeordnet oder ausgebildet ist, sondern schräg zu der Innenseite. Daher ist es erforderlich, die jeweils richtigen, d. h. vorgegebenen Innenseiten der Glieder an das Objekt anzulegen, um Messfehler zu vermeiden.

Zudem ist durch den Einsatz des erfindungsgemäßen Gliedermaßstabs ein zusätzliches Messgerät zur Durchmessermessung, beispielsweise ein Messschieber, nicht mehr erforderlich. Dies gilt insbesondere dann, wenn der Gliedermaßstab zusätzlich eine Längenermittlungsskale aufweist, so dass auch die allgemein bekannten Messaufgaben, nämlich insbesondere die Längenmessung, mit dem erfindungsgemäßen Gliedermaßstab erfüllt werden können. Dadurch ist ein Kostenaufwand, Logistikaufwand und Transportaufwand reduziert. Beispielsweise Handwerker müssen auf diese Weise lediglich ein Messgerät statt zwei verschiedene Messgeräte mit sich führen, um erforderliche Messaufgaben zu erfüllen.

Zweckmäßigerweise ist das Glied, welches den vorgegebenen Bereich aufweist, das erste Glied des Gliedermaßstabs. Dies ermöglicht eine einfache Bedienung des Gliedermaßstabs und eine einfache und exakte Positionierung des vorgegebenen Bereichs auf der Skale, so dass eine Gefahr von Fehlmessungen aufgrund einer Fehlbedienung des Gliedermaßstabs erheblich reduziert ist.

In einer vorteilhaften Ausführungsform ist das Glied, welches die Skale zur Durchmessermessung aufweist, das dritte Glied des Gliedermaßstabs. Zwischen dem Glied, welches den auf der Skale zu positionierenden markierten Bereich aufweist, und dem Glied, welches die Skale aufweist, muss sich ein weiteres Glied Befinden, um das Dreieck um das Objekt herum zu schließen. Daher könnten natürlich die Skale zur Durchmessermessung auch auf dem ersten Glied und der markierte Bereich auf dem dritten Glied positioniert sein oder bei einem Gliedermaßstab mit mehr als drei Gliedern wären auch noch entsprechend weitere Konstellationen möglich.

Vorzugsweise erstreckt sich die Skale über eine gesamte Breite des betreffenden Gliedes. Dabei sind Teilstriche der Skale derart auf dem Glied ausgebildet, dass auch bei einem Verschieben des vorgegebenen Bereiches auf der Skale zwischen Seitenrändern des Gliedes der jeweilige Durchmesserwert exakt angezeigt wird und abzulesen ist. Eine punktgenaue Positionierung des vorgegebenen Bereichs auf der Skale ist dadurch nicht erforderlich, sondern eine Positionierung des vorgegebenen Bereichs auf der Skale zwischen den Seitenrändern des Gliedes ist bereits ausreichend, um eine exakte Messung durchzuführen. Dadurch ist eine korrekte Bedienung des Gliedermaßstabes erleichtert und eine Gefahr von Fehlmessungen aufgrund einer Fehlbedienung des Gliedermaßstabs erheblich reduziert.

Der vorgegebene Bereich ist zweckmäßigerweise als eine Markierung auf dem betreffenden Glied gekennzeichnet. Diese Markierung kann beispielsweise farblich ausgebildet sein. Insbesondere ist diese Markierung vorzugsweise derart angeordnet, dass durch die Markierung eine Kante des Gliedes exakt markiert ist, welche einen jeweiligen Teilstrich oder Bereich der Skale berührt, der abzulesen ist. D. h. dieser beispielsweise durch die Markierung vorgegebene Bereich fungiert als Zeiger für die Skale, welcher eindeutig auf einen jeweils abzulesenden Bereich der Skale zeigt.

Vorteilhafterweise ist der vorgegebene Bereich an einem freien Ende des Gliedermaßstabs angeordnet oder ausgebildet. Auf diese Weise ist beispielsweise eine Ecke oder eine Seitenkante im Bereich der Ecke am freien Ende des Gliedermaßstabs, d. h. am freien Ende eines ersten oder letzten Gliedes des Gliedermaßstabs, als derartiger Zeiger nutzbar. Das freie Ende des Gliedermaßstabs ist dabei auf einfache Weise korrekt auf der Skale zu positionieren und der Skalenwert, welcher jeweils durch den als Zeiger fungierenden vorgegebenen Bereich angezeigt wird, ist auf der Skale exakt abzulesen.

In einer vorteilhaften Ausführungsform erstreckt sich die Skale zur Durchmessermessung über eine Mehrzahl von aneinander angrenzenden Gliedern, wobei der Gliedermaßstab vor oder nach den Gliedern, welche die Skale aufweisen, eine Anzahl weiterer Glieder aufweist, von denen ein Glied den vorgegebenen Bereich aufweist und wobei diese Anzahl der weiteren Glieder mindestens doppelt so groß ist wie eine Anzahl der Glieder mit der Skale zur Durchmessermessung. D. h. das Glied, welches die Skale aufweist und eine Seite des Dreiecks bildet, welches das zu messende Objekt umschließt, ist in diesem Fall aus einer Mehrzahl von Teilgliedern gebildet, welche nicht gegeneinander zu verschwenken, sondern geradlinig hintereinander auszurichten sind. Die anderen Seiten des Dreiecks, welches das zu messende Objekt umschließt, sind in diesem Fall jeweils auch aus einer Mehrzahl von geradlinig hintereinander ausgerichteten Gliedern gebildet, welche dann Teilglieder des jeweiligen Gliedes bilden, das eine weitere Seite dieses Dreiecks bildet. Dies ermöglicht eine Durchmessermessung auch größerer Objekte.

D. h. in diesem Fall sind die Glieder, welche jeweils eine Seite des das zu messende Objekt umschließenden Dreiecks bilden, wie beschrieben, jeweils aus einer Mehrzahl von Teilgliedern des Gliedermaßstab gebildet, d. h. es ist dann nicht jedes einzelne Teilglied gegenüber angrenzenden Teilgliedern zu verschwenken, sondern eine jeweils vorgegebene Anzahl von aneinander angrenzenden Teilgliedern sind jeweils geradlinig hintereinander ausgerichtet zu belassen und bilden jeweils eines der drei Glieder, die jeweils eine Seite des das zu messende Objekts umschließenden Dreiecks bilden. Dabei weisen zweckmäßigerweise alle drei Glieder eine gleiche Anzahl Teilglieder auf.

Zweckmäßigerweise ist die Skale auf einer Flachseite des betreffenden Gliedes ausgebildet oder angeordnet und auf einer gegenüberliegenden Flachseite des Gliedes sowie auf angrenzenden Flachseiten der anderen Glieder ist eine Längenermittlungsskale ausgebildet oder angeordnet. Dies ermöglicht auch eine Längenmessung mittels des Gliedermaßstabs, so dass der Gliedermaßstab zwei Messfunktionen erfüllt, wodurch ein zweites Messgerät, beispielsweise ein Messschieber, überflüssig ist. Durch die Verteilung der beiden Skalen auf unterschiedliche Flachseiten des Gliedermaßstabs ist die Gefahr von Fehlmessungen durch eine Verwendung der falschen Skale für die jeweilige Messaufgabe reduziert.

In einer vorteilhaften Ausführungsform weist der Gliedermaßstab zwei Skalen mit unterschiedlichen Maßeinheiten zur Durchmessermessung von Objekten auf. Beispielsweise ist eine Skale als Skale mit einer metrischen Maßeinheit ausgebildet und eine weitere Skale ist als eine Skale mit einer nichtmetrischen Maßeinheit ausgebildet, zum Beispiel mit der Maßeinheit Zoll. Dies ermöglicht die Durchmessermessung in zwei verschiedenen Maßeinheiten. Dabei ist beispielsweise die Skale mit der metrischen Maßeinheit im Bereich eines Endes des Gliedermaßstabs ausgebildet, beispielsweise auf dem dritten Glied des Gliedermaßstabs, und die Skale mit der nichtmetrischen Maßeinheit ist im Bereich des anderen Endes des Gliedermaßstabs ausgebildet, zum Beispiel auf einem drittletzten Glied des Gliedermaßstabs. Alternativ oder zusätzlich wäre auch die Ausbildung oder Anordnung weiterer Skalen auf der anderen Flachseite des Gliedermaßstabs möglich, so dass beide Flachseiten eine oder mehrere Skalen zur Durchmessermessung aufweisen würden.

Der Gliedermaßstab ist zweckmäßigerweise aus Holz, Kunststoff und/oder Metall ausgebildet. Dies ermöglicht eine einfache und kostengünstige Herstellung eines robusten Gliedermaßstabs.

Ausführungsbeispiele der Erfindung werden im Folgenden anhand einer Zeichnung näher erläutert.

Darin zeigt:

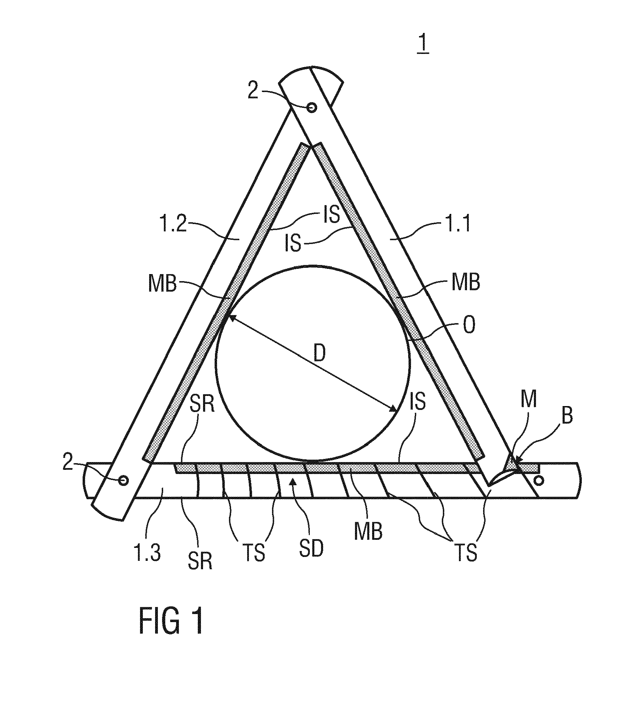

- Figur 1: schematisch eine beispielhafte Ausführungsform eines Gliedermaßstabs, welcher zur Durchmessermessung ein Objekt umschließt.

**Figur 1** zeigt schematisch eine beispielhafte Ausführungsform eines Gliedermaßstabs 1, welcher zur Durchmessermessung ein Objekt O umschließt. Dieser Gliedermaßstab 1 umfasst zumindest drei schwenkbar aneinander befestigte Glieder 1.1, 1.2. 1.3, welche jeweils eine gleiche Länge aufweisen.

Aus Gründen der Übersichtlichkeit sind hier lediglich diese drei Glieder 1.1, 1.2. 1.3 dargestellt, welche für die im Folgenden noch näher erläuterte Durchmessermessung erforderlich sind. Der Gliedermaßstab 1 kann natürlich noch weitere, hier nicht näher dargestellte Glieder umfassen, welche dann beispielsweise derart verschwenkt sind, dass sie unter einem oder mehreren der hier dargestellten Glieder 1.1, 1.2. 1.3 positioniert sind. Die schwenkbare Befestigung der Glieder 1.1, 1.2. 1.3 ist jeweils im Bereich von Stirnseiten der Glieder 1.1, 1.2. 1.3 positioniert und als eine Schwenkachse 2 ausgebildet, über welche jeweils zwei der Glieder 1.1, 1.2. 1.3 schwenkbar miteinander verbunden sind. Diese Schwenkachsen 2 sind beispielsweise als Nieten ausgebildet.

Im hier dargestellten Beispiel weist eines der Glieder 1.1, 1.2. 1.3, nämlich das dritte Glied 1.3 des Gliedermaßstabs 1, eine Skale SD zur Durchmessermessung von Objekten O auf. Diese Skale SD ist, wie in Figur 1 gezeigt, derart ausgebildet, dass bei einem vollständigen Umschließen des Objektes O mit den drei benachbarten Gliedern 1.1, 1.2. 1.3, wobei Innenseiten IS der drei Glieder 1.1, 1.2. 1.3 jeweils am Objekt O anliegen, ein vorgegebener Bereich B des ersten Gliedes 1.1 an der Skale SD anliegt und ein jeweiliger Anlagepunkt an der Skale SD einen Durchmesser D des jeweiligen Objektes O anzeigt. Im hier dargestellten Beispiel mit lediglich drei Gliedern 1.1, 1.2. 1.3 weist das erste Glied 1.1 des Gliedermaßstabs 1 diesen vorgegebenen Bereich B auf. Der vorgegebene Bereich B ist hier durch eine Markierung M, welche beispielsweise farblich ausgebildet sein kann, gekennzeichnet.

Der durch die Markierung M gekennzeichnete vorgegebene Bereich B ist an einem freien Ende des Gliedermaßstabs 1 angeordnet oder ausgebildet, d. h. am freien Ende des ersten Gliedes 1.1. Im hier dargestellten Beispiel ist die Markierung M in einer Ecke einer Seitenkante und einer Stirnseitenkante positioniert. Dieser durch die Markierung M gekennzeichnete Bereich ist auf der Skale SD zu positionieren und der Durchmesserwert ist an dem durch die Markierung M gekennzeichneten Seitenkantenbereich des ersten Gliedes 1.1, d. h. an dem vorgegebenen Bereich B, abzulesen, welcher auf den jeweiligen Durchmesserwert auf der Skale SD deutet. Durch diese Anordnung des vorgegebenen Bereichs B ist dieser auf einfache Weise und sehr exakt auf der Skale SD zu positionieren und der durch die Markierung M gekennzeichnete Seitenkantenbereich fungiert als Zeiger, welcher den auf der Skale SD abzulesenden Wert markiert. Dieser Wert ist auf diese Weise genau abzulesen.

Die Skale SD erstreckt sich über eine gesamte Breite des dritten Gliedes 1.3. Dabei sind Teilstriche TS der Skale SD, wie in Figur 1 dargestellt, derart auf dem dritten Glied 1.3 ausgebildet, dass auch bei einem Verschieben des vorgegebenen Bereiches B auf der Skale SD zwischen Seitenrändern SR des dritten Gliedes 1.3 der jeweilige Durchmesserwert exakt angezeigt wird und abzulesen ist, d. h. die Teilstriche TS sind nicht senkrecht zu den Seitenrändern SR ausgerichtet, sondern schräg, und einige Teilstriche TS sind gekrümmt. Dies ist erforderlich, da bei einem Verschieben der Glieder 1.1, 1.2. 1.3, so dass der vorgegebene Bereich B zwischen den Seitenrändern SR des dritten Gliedes 1.3 verschoben wird, wobei die Glieder 1.1, 1.2. 1.3 jedoch stets mit ihren Innenseiten IS am Objekt O anliegen, die Glieder 1.1, 1.2. 1.3 Schwenkbewegungen relativ zueinander durchführen. D. h. die Bewegung des ersten Gliedes 1.1 relativ zum dritten Glied 1.3 ist nicht linear. Daher sind auch die Teilstriche TS nicht linear, sondern gekrümmt ausgebildet, um an jeder Position, die der vorgegebene Bereich B auf der Skale SD einnehmen kann, ein exaktes Ablesen des Messwertes für den Durchmesser D zu ermöglichen.

Um Messfehler zu vermeiden, sind die an das Objekt O anzulegenden Innenseiten IS der Glieder 1.1, 1.2, 1.3 markiert. Dies erfolgt im hier dargestellten Beispiel mittels eines vorzugsweise farblichen Markierungsbereiches MB, welcher sich entlang der an das Objekt O anzulegenden vorgegebenen Innenseiten IS der Glieder 1.1, 1.2, 1.3 erstreckt. Auf diese Weise sind Messfehler verhindert, da sichergestellt ist, dass die richtigen Innenseiten IS, d. h. die vorgegebenen Innenseiten IS und nicht Außenseiten der Glieder 1.1, 1.2, 1.3 am Objekt O anliegen. Eine Fehlbedienung, d. h. ein Anlegen der den Innenseiten IS gegenüberliegenden Außenseiten der Glieder 1.1, 1.2, 1.3 an das Objekt O hätte aufgrund der gekrümmten und nicht senkrecht, sondern schräg zu den Seitenrändern SR des dritten Gliedes 1.3 verlaufenden Teilstriche TS und aufgrund der dann fehlerhaften Positionierung des vorgegebenen Bereichs B auf der Skale SD einen Messfehler zur Folge. Dies ist durch das Markieren der Innenseiten IS mittels des Markierungsbereiches MB verhindert.

Die Teilstriche TS weisen nicht nur unterschiedliche Krümmungen auf, sondern auch einen unterschiedlichen Abstand zueinander. Dabei handelt es sich hier um eine Skale SD mit einer metrischen Maßeinheit, d. h. die Skale SD ist beispielsweise mittels der Teilstriche TS in Zentimeterwerte unterteilt. Aufgrund von Winkelbeziehungen des das Objekt O umschließenden Dreiecks der drei Glieder 1.1, 1.2. 1.3 sind die Teilstriche TS für geringe Durchmesserwerte enger beieinander als die Teilstriche TS für höhere Durchmesserwerte, d. h. der Abstand zwischen den Teilstrichen TS vergrößert sich, je größer die durch die Teilstriche TS markierten Durchmesserwerte der Skale SD sind. Vorteilhafterweise weist die Skale SD noch hier nicht näher dargestellte weitere Teilstriche auf, so dass auch eine millimetergenaue Durchmessermessung ermöglicht ist.

Im hier dargestellten Beispiel ist die Skale SD zur Durchmessermessung auf einer Flachseite des dritten Gliedes 1.3 angeordnet. Auf einer hier nicht gezeigten gegenüberliegenden Flachseite des dritten Gliedes 1.3 und der anderen Glieder 1.1, 1.2, d. h. auf einer Unterseite des hier gezeigten Gliedermaßstabs 1, ist zweckmäßigerweise eine Längenermittlungsskale ausgebildet oder angeordnet. Dies ermöglicht es, mittels dieses Gliedermaßstabs 1 nicht nur Durchmesser D von Objekten O zu messen, sondern auch Längenmessungen durchzuführen, wie dies mit aus dem Stand der Technik bekannten Gliedermaßstäben möglich ist. Dadurch erfüllt der Gliedermaßstab 1 zwei Messfunktionen, wodurch ein zweites Messgerät, beispielsweise ein Messschieber bzw. ein aus dem Stand der Technik bekannter Gliedermaßstab, überflüssig ist. Die Längenermittlungsskale kann beispielsweise als eine Skale mit einer metrischen Maßeinheit ausgebildet sein, beispielsweise millimetergenau, oder als eine Skale mit einer nichtmetrischen Maßeinheit, zum Beispiel Zoll.

In einer hier nicht gezeigten weiteren vorteilhaften Ausführungsform weist der Gliedermaßstab 1 zwei Skalen SD mit unterschiedlichen Maßeinheiten zur Durchmessermessung von Objekten O auf. Beispielsweise ist eine Skale SD, wie die hier dargestellte Skale SD, als Skale SD mit einer metrischen Maßeinheit ausgebildet und eine weitere, hier nicht dargestellte Skale ist als eine Skale mit einer nichtmetrischen Maßeinheit ausgebildet, zum Beispiel mit der Maßeinheit Zoll. Dies ermöglicht die Durchmessermessung in zwei verschiedenen Maßeinheiten. Dazu weist der Gliedermaßstab 1 dann vorteilhafterweise mehr als nur die drei hier dargestellten Glieder 1.1, 1.2. 1.3 auf. Dann ist beispielsweise die Skale SD mit der metrischen Maßeinheit im Bereich eines Endes des Gliedermaßstabs 1 ausgebildet, beispielsweise, wie in Figur 1 dargestellt, auf dem dritten Glied 1.3 des Gliedermaßstabs 1, und die Skale mit der nichtmetrischen Maßeinheit ist im Bereich des anderen Endes des Gliedermaßstabs 1 ausgebildet, zum Beispiel auf einem drittletzten Glied des Gliedermaßstabs 1. Die für die beiden Skalen SD jeweils gültigen vorgegebenen Bereiche B sind dann beide durch entsprechende Markierungen M an den freien Enden des Gliedermaßstabs 1 gekennzeichnet.

In einer weiteren hier nicht näher dargestellten vorteilhaften Ausführungsform erstreckt sich die Skale SD zur Durchmessermessung über eine Mehrzahl von aneinander angrenzenden Gliedern, wobei der Gliedermaßstab 1 vor oder nach den Gliedern, welche die Skale SD aufweisen, eine Anzahl weiterer Glieder aufweist, von denen ein Glied den vorgegebenen Bereich B aufweist und wobei diese Anzahl der weiteren Glieder mindestens doppelt so groß ist wie eine Anzahl der Glieder mit der Skale SD zur Durchmessermessung. D. h. das Glied, welches die Skale SD aufweist und eine Seite des Dreiecks bildet, welches das zu messende Objekt O umschließt, ist dann aus einer Mehrzahl von Teilgliedern gebildet, welche nicht gegeneinander zu verschwenken, sondern geradlinig hintereinander auszurichten sind. Die anderen Seiten des Dreiecks, welches das zu messende Objekt O umschließt, sind dann jeweils auch aus einer Mehrzahl von geradlinig hintereinander ausgerichteten Gliedern gebildet. Diese Glieder bilden dann Teilglieder des jeweiligen Gliedes, welches jeweils eine weitere Seite dieses Dreiecks bildet.

Dies ermöglicht eine Durchmessermessung auch größerer Objekte O. Die Glieder, welche dann jeweils eine Seite des das zu messende Objekt O umschließenden Dreiecks bilden, sind dann, wie beschrieben, jeweils aus einer Mehrzahl von Teilgliedern des Gliedermaßstab 1 gebildet, d. h. es ist dann nicht jedes einzelne Teilglied gegenüber angrenzenden Teilgliedern zu verschwenken, sondern eine jeweils vorgegebene Anzahl von aneinander angrenzenden Teilgliedern sind dann jeweils geradlinig hintereinander ausgerichtet zu belassen und bilden dann jeweils eines der drei Glieder, die jeweils eine Seite des das zu messende Objekts O umschließenden Dreiecks bilden. Dabei weisen zweckmäßigerweise alle drei Glieder eine gleiche Anzahl Teilglieder auf.

Der Gliedermaßstab 1 ermöglicht das Messen des Durchmessers D von Objekten O, insbesondere von runden Objekten O. Dabei ist es nicht erforderlich, dass eine Stirnseite des Objektes O zugänglich ist, um dadurch den Durchmesser D durch Auflegen des Gliedermaßstabs 1 quer über die Stirnseite messen zu können, sondern der dargestellte Gliedermaßstab 1 ermöglicht die Durchmessermessung, wie oben beschrieben, durch ein vollständiges Umschließen des Objektes O. Dies ermöglicht die Durchmessermessung auch von Objekten O, deren Stirnseiten verdeckt und/oder nicht zugänglich sind, beispielsweise in einem eingebauten Zustand der Objekte O. Des Weiteren ist dadurch insbesondere auch eine exakte Durchmessermessung von Objekten O ermöglicht, welche über eine Längsausdehnung hinweg an verschiedenen Stellen unterschiedliche Durchmesser D aufweisen, so dass, selbst wenn die Stirnseite des Objektes O zugänglich sein sollte, durch Auflegen des Gliedermaßstabs 1 auf die Stirnseite der jeweilige Durchmesser D nur grob geschätzt werden könnte.

Der dargestellte Gliedermaßstab 1 ist im Gegensatz dazu an der jeweiligen Stelle, an welcher der Durchmesser D des Objektes O zu bestimmen ist, zu positionieren und die drei benachbarten Glieder 1.1, 1.2. 1.3 sind dann derart gegeneinander zu verschwenken, dass sie das Objekt O an dieser Stelle vollständig umschließen, wobei die Innenseiten IS der drei Glieder 1.1, 1.2. 1.3 jeweils am Objekt O anliegen und der vorgegebene Bereich des ersten Gliedes 1.1 an der Skale SD auf dem dritten Glied 1.3 anliegt. D. h. die drei Glieder 1.1, 1.2. 1.3 bilden dann ein Dreieck. Am Anlagepunkt des vorgegebenen Bereichs B auf der Skale SD ist dann der jeweilige Durchmesserwert exakt abzulesen.

Zudem ist durch den Einsatz dieses Gliedermaßstabs 1 ein zusätzliches Messgerät zur Durchmessermessung, beispielsweise ein Messschieber, nicht mehr erforderlich. Dies gilt insbesondere dann, wenn der Gliedermaßstab 1 zusätzlich die Längenermittlungsskale aufweist, so dass auch die allgemein bekannten Messaufgaben, nämlich insbesondere die Längenmessung, mit dem Gliedermaßstab 1 erfüllt werden können. Dadurch ist ein Kostenaufwand, Logistikaufwand und Transportaufwand reduziert. Beispielsweise Handwerker müssen auf diese Weise lediglich ein Messgerät statt zwei verschiedene Messgeräte mit sich führen, um erforderliche Messaufgaben zu erfüllen.

### BEZUGSZEICHENLISTE

- 1: Gliedermaßstab
- 1.1: erstes Glied
- 1.2: zweites Glied
- 1.3: drittes Glied
- 2: Schwenkachse

- B: Bereich
- D: Durchmesser
- IS: Innenseite
- M: Markierung
- MB: Markierungsbereich
- O: Objekt
- SD: Skale zur Durchmessermessung
- SR: Seitenrand
- TS: Teilstrich

## Patentansprüche

1. Gliedermaßstab (1), umfassend zumindest drei schwenkbar aneinander befestigte Glieder (1.1, 1.2, 1.3),
**dadurch gekennzeichnet, dass** zumindest eines der Glieder (1.1, 1.2, 1.3) zumindest eine Skale (SD) zur Durchmessermessung von Objekten (O) aufweist, welche derart ausgebildet ist, dass bei einem vollständigen Umschließen des Objektes (O) mit drei benachbarten Gliedern (1.1, 1.2, 1.3), wobei Innenseiten (IS) der drei Glieder (1.1, 1.2, 1.3) jeweils am Objekt (O) anliegen, ein vorgegebener Bereich (B) eines der Glieder (1.1, 1.2, 1.3) an der Skale (SD) anliegt und ein jeweiliger Anlagepunkt an der Skale (SD) den Durchmesser (D) des Objektes (O) anzeigt.

2. Gliedermaßstab (1) nach Anspruch 1,
**dadurch gekennzeichnet, dass** das Glied (1.1, 1.2, 1.3), welches den vorgegebenen Bereich (B) aufweist, das erste Glied (1.1) des Gliedermaßstabs (1) ist.

3. Gliedermaßstab (1) nach Anspruch 1 oder 2,
**dadurch gekennzeichnet, dass** das Glied (1.1, 1.2, 1.3), welches die Skale (SD) zur Durchmessermessung aufweist, das dritte Glied (1.3) des Gliedermaßstabs (1) ist.

4. Gliedermaßstab (1) nach einem der Ansprüche 1 bis 3,
**dadurch gekennzeichnet, dass** sich die Skale (SD) über eine gesamte Breite des Gliedes (1.3) erstreckt.

5. Gliedermaßstab (1) nach einem der vorhergehenden Ansprüche,
**dadurch gekennzeichnet, dass** der vorgegebene Bereich (B) durch eine Markierung (M) auf dem Glied (1.1) gekennzeichnet ist.

6. Gliedermaßstab (1) nach einem der vorhergehenden Ansprüche,
**dadurch gekennzeichnet, dass** der vorgegebene Bereich (B) an einem freien Ende des Gliedermaßstabs (1) angeordnet oder ausgebildet ist.

7. Gliedermaßstab (1) nach einem der vorhergehenden Ansprüche,
**dadurch gekennzeichnet, dass** sich die Skale (SD) zur Durchmessermessung über eine Mehrzahl von aneinander angrenzenden Gliedern erstreckt, wobei der Gliedermaßstab (1) vor oder nach den Gliedern, welche die Skale (SD) aufweisen, eine Anzahl weiterer Glieder aufweist, von denen ein Glied den vorgegebenen Bereich (B) aufweist und wobei diese Anzahl der weiteren Glieder mindestens doppelt so groß ist wie eine Anzahl der Glieder mit der Skale (SD) zur Durchmessermessung.

8. Gliedermaßstab (1) nach einem der vorhergehenden Ansprüche,
**dadurch gekennzeichnet, dass** die Skale (SD) auf einer Flachseite des Gliedes (1.3) ausgebildet oder angeordnet ist und auf einer gegenüberliegenden Flachseite des Gliedes (1.3) sowie auf angrenzenden Flachseiten der anderen Glieder (1.1, 1.2) eine Längenermittlungsskale ausgebildet oder angeordnet ist.

9. Gliedermaßstab (1) nach einem der vorhergehenden Ansprüche,
**gekennzeichnet durch** zwei Skalen (SD) mit unterschiedlichen Maßeinheiten zur Durchmessermessung von Objekten (O).

10. Gliedermaßstab (1) nach einem der vorhergehenden Ansprüche,
**gekennzeichnet durch** eine Ausbildung aus Holz, Kunststoff und/oder Metall.

## Claims

1. Folding rule (1), comprising at least three links (1.1, 1.2, 1.3) that are pivotably fastened to each other, **characterized in that** at least one of the links (1.1, 1.2, 1.3) has at least one scale (SD) for measuring the diameter of objects (0), which scale (SD) is designed in such a way that, when the object (0) is completely enclosed by three adjacent links (1.1, 1.2, 1.3), with inner sides (IS) of the three links (1.1, 1.2, 1.3) each bearing on the object (0), a predefined area (B) of one of the links (1.1, 1.2, 1.3) bears on the scale (SD) and a respective contact point on the scale (SD) indicates the diameter (D) of the object (0).

2. Folding rule (1) according to Claim 1, **characterized in that** the link (1.1, 1.2, 1.3) that has the predefined area (B) is the first link (1.1) of the folding rule (1).

3. Folding rule (1) according to Claim 1 or 2, **characterized in that** the link (1.1, 1.2, 1.3) that has the scale (SD) for measuring a diameter is the third link (1.3) of the folding rule (1).

4. Folding rule (1) according to one of Claims 1 to 3, **characterized in that** the scale (SD) extends across a full width of the link (1.3).

5. Folding rule (1) according to one of the preceding claims, **characterized in that** the predefined area (B) is identified by a marking (M) on the link (1.1).

6. Folding rule (1) according to one of the preceding claims, **characterized in that** the predefined area (B) is arranged or formed on a free end of the folding rule (1).

7. Folding rule (1) according to one of the preceding claims, **characterized in that** the scale (SD) for measuring a diameter extends across a plurality of links adjoining each other, wherein the folding rule (1) has, before or after the links with the scale (SD), a number of further links, of which one link has the predefined area (B), and wherein this number of the further links is at least twice as great as a number of the links with the scale (SD) for measuring a diameter.

8. Folding rule (1) according to one of the preceding claims, **characterized in that** the scale (SD) is formed or arranged on a flat side of the link (1.3), and a length-determining scale is formed or arranged on an opposite flat side of the link (1.3) and on adjoining flat sides of the other links (1.1, 1.2).

9. Folding rule (1) according to one of the preceding claims, **characterized by** two scales (SD) with different measurement units for measuring the diameter of objects (0).

10. Folding rule (1) according to one of the preceding claims, **characterized in that** it is made of wood, plastic and/or metal.

## Revendications

1. Mètre pliant (1), comprenant au moins trois membres (1.1, 1.2, 1.3) fixés de manière pivotante les uns aux autres, **caractérisé en ce qu'**au moins l'un des membres (1.1, 1.2, 1.3) présente au moins une échelle (SD) pour la mesure de diamètres d'objets (0), laquelle est réalisée de telle sorte que lorsque l'objet (0) est complètement entouré par trois membres (1.1, 1.2, 1.3) adjacents, les côtés internes (IS) des trois membres (1.1, 1.2, 1.3) s'appliquant à chaque fois contre l'objet (0), une région prédéfinie (B) de l'un des membres (1.1, 1.2, 1.3) s'applique contre l'échelle (SD) et un point d'appui respectif contre l'échelle (SD) indique le diamètre (D) de l'objet (0).

2. Mètre pliant (1) selon la revendication 1, **caractérisé en ce que** le membre (1.1, 1.2, 1.3) qui présente la région prédéfinie (B) est le premier membre (1.1) du mètre pliant (1).

3. Mètre pliant (1) selon la revendication 1 ou 2, **caractérisé en ce que** le membre (1.1, 1.2, 1.3) qui présente l'échelle (SD) pour la mesure de diamètres est le troisième membre (1.3) du mètre pliant (1).

4. Mètre pliant (1) selon l'une quelconque des revendications 1 à 3, **caractérisé en ce que** l'échelle (SD) s'étend sur toute la largeur du membre (1.3).

5. Mètre pliant (1) selon l'une quelconque des revendications précédentes, **caractérisé en ce que** la région prédéfinie (B) est **caractérisée par** un marquage (M) sur l'organe (1.1).

6. Mètre pliant (1) selon l'une quelconque des revendications précédentes, **caractérisé en ce que** la région prédéfinie (B) est disposée ou est réalisée au niveau d'une extrémité libre du mètre pliant (1).

7. Mètre pliant (1) selon l'une quelconque des revendications précédentes, **caractérisé en ce que** l'échelle (SD) pour la mesure de diamètres s'étend sur une pluralité de membres adjacents les uns aux autres, le mètre pliant (1) présentant, avant ou après les membres qui présentent l'échelle (SD), un nombre de membres supplémentaires dont un membre présente la région prédéfinie (B) et ce nombre de membres supplémentaires étant au moins deux fois plus grand qu'un nombre des membres ayant l'échelle (SD) pour la mesure de diamètres.

8. Mètre pliant (1) selon l'une quelconque des revendications précédentes, **caractérisé en ce que** l'échelle (SD) est réalisée ou est disposée sur un côté plat du membre (1.3) et une échelle de détermination de longueur est réalisée ou est disposée sur un côté plat opposé du membre (1.3) ainsi que sur des côtés plats adjacents des autres membres (1.1, 1.2).

9. Mètre pliant (1) selon l'une quelconque des revendications précédentes, **caractérisé par** deux échelles (SD) ayant des unités de mesure différentes pour la mesure de diamètres d'objets (O).

10. Mètre pliant (1) selon l'une quelconque des revendications précédentes, **caractérisé par** une réalisation en bois, en plastique et/ou en métal.
